# EUROPÄISCHE PATENTSCHRIFT

(11) **EP 2 176 629 B1**
(45) Veröffentlichungstag und Bekanntmachung des Hinweises auf die Patenterteilung: **10.10.2012**
(21) Anmeldenummer: 08774621.0
(22) Anmeldetag: 02.07.2008
(51) Int. Cl.: G01F 23/26, G01N 33/28

(54) **FLÜSSIGKEITSSENSOR**
LIQUID SENSOR
DÉTECTEUR DE LIQUIDE

(30) Priorität: 08.08.2007 DE 102007037364
(43) Veröffentlichungstag der Anmeldung: 21.04.2010
(73) Patentinhaber: Robert Bosch GmbH, 70442 Stuttgart (DE)
(72) Erfinder: KAESS, Udo, 70599 Stuttgart (DE); HALLER, Volker, 71088 Holzgerlingen (DE); SCHERER, Monika, 72764 Reutlingen (DE); KLETT, Gustav, 72116 Moessingen (DE); NIEMANN, Markus, 66701 Beckingen (DE)
(86) Internationale Anmeldenummer: PCT/EP2008/058482
(87) Internationale Veröffentlichungsnummer: WO 2009/019084

(56) Entgegenhaltungen:
- WO-A-99/28149
- WO-A-2006/067625
- WO-A-2006/133702
- DE-A1- 19 757 924

## Beschreibung

### Stand der Technik

Die vorliegende Erfindung betrifft einen Flüssigkeitssensor, insbesondere einen Füllstandssensor für Kraftstoff und/oder einen Flüssigkeitssensor für eine Motorölzusammensetzung.

Ein Füllstandssensor ist aus der DE 197 57 924 A1 bekannt. Zwei ineinander angeordnete röhrenförmige Elektroden dienen zum Bestimmen der Dielektrizitätskonstante oder des spezifischen Widerstandswertes von Öl. Die Elektroden werden durch Federelemente kontaktiert.

Eine weitere Sensoranordnung zum Bestimmen des Widerstandswertes von Öl ist in der DE 19511 556 C1 beschrieben. Zwei zylindrischförmige Elektroden sind koaxial angeordnet und voneinander durch Distanzkörper isoliert. Der Füllstandssensor weist einen Befestigungsflansch an einem Gehäuserand auf.

Das Gehäuse der Füllstandssensoren ist aus Kunststoff gefertigt. Die kapazitativen Messelemente werden dazu mit einem entsprechenden Kunststoff umspritzt. Die Befestigung in einem Hohlraum oder an einer Durchführung zu einem Hohlraum kann mittels eines Flansches erfolgen. Eine Versiegelung wird typischerweise durch Verwendung von Klebstoff erreicht.

Aus der WO 2006/133702 A1 ist ein Sensor mit einem Sensorelement zum Einsatz in geschlossenen Systemen wie beispielsweise hydraulischen Systemen zur Erfassung verschiedener Parameter bekannt. Zur Vermeidung zusätzlicher Durchkontaktierungen ist das Sensorelement auf einem Trägerelement aufgebracht, durch das das Sensorelement von außen innerhalb des geschlossenen Systems kontaktiert werden kann. Hierzu besteht das Trägerelement aus einem unteren Schraubkopf und einem darauf montierten Bolzen, auf dessen Spitze das Sensorelement aufgebracht ist. Zur Abdichtung beim Einbringen des Sensors in eine entsprechende Öffnung ist an der Spitze des Bolzens ein O-Ring angebracht.

Der Füllstandssensor mit den Merkmalen des Patentanspruchs 1 weist verbesserte mechanische Eigenschaften auf.

Der erfindungsgemäße Flüssigkeitssensor beinhaltet einen metallischen Gehäusekörper, der eine Dose und einen die Dose umlaufenden Flanschring aufweist. Ein Gehäusemantel ist aus einem Kunststoffmaterial gebildet und auf einer Außenseite des Gehäusekörpers angeordnet. Ein Dichtungsring, der auf dem Flanschring umlaufend angeordnet ist, unterteilt den

Gehäusemantel in zwei voneinander isolierte Abschnitte. Der metallische Gehäusekörper sorgt unter anderem für eine hohe mechanische Stabilität des Flüssigkeitssensors. Der Gehäusemantel dient unter anderem dazu, die Einwirkung von aggressiven Flüssigkeiten, z. B. Öl, auf den metallischen Gehäusekörper zu verringern. Der Dichtungsring stellt in seiner speziellen Anordnung sicher, dass ein eingebauter Flüssigkeitssensor eine Durchführung, in die er isolierend eingesetzt ist, isolierend versiegelt.

Eine Weiterbildung sieht vor, dass der Dichtungsring den metallischen Gehäusekörper im Bereich des Flanschrings berührt.

Gemäß einer besonderen Ausgestaltung ist ein zylindrisch-förmiger Kapazitätssensor an einer Außenseite der Dose angeschweißt. Durch die materialschlüssige Verbindung wird eine hohe mechanische Stabilität des länglichen und wegstehenden Kapazitätssensors erreicht.

In einer Ausgestaltung ist ein Einsatzteil in der Dose eingesetzt und auf dem Einsatzteil sind elektronische Baugruppen zur Ansteuerung und/oder Versorgung des Flüssigkeitssensors angeordnet. Das Einsatzteil kann mit der Dose verschweißt sein.

In einer Ausgestaltung ist eine Steckerverbindung an dem Einsatzteil befestigt und leitfähige Elemente sind an den elektronischen Baugruppen zum elektrischen Kontaktieren der Steckerverbindung vorgesehen.

Die Dose kann an ihrer Außenseite ein Außengewinde zum Befestigen des Flüssigkeitssensors aufweisen.

In einem ersten der beiden voneinander isolierten Abschnitte des Gehäusemantels können Buchsen zum Befestigen des Gehäuses angeordnet sein. Ein zweiter der beiden voneinander isolierten Abschnitte des Gehäusemantels kann zumindest die Seitenwände der Dose teilweise bedecken.

Der Flüssigkeitssensor kann als Füllstandssensor für Kraftstoff und/oder als Flüssigkeitssensor für eine Motorölzusammensetzung verwendet werden.

Nachfolgend wird die Erfindung anhand von beispielhaften Ausführungsformen und Figuren erläutert.

In den Figuren:
- Fig. 1: zeigt einen Teilquerschnitt durch einen Flüssigkeitssensor;
- Fig. 2: zeigt eine Schrägansicht des Flüssigkeitssensors von Fig. 1;
- Fig. 3: zeigt eine Detailansicht von Fig. 2;
- Fig. 4: zeigt eine Schrägansicht einer Ausführungsform eines Flüssigkeitssensors;
- Fig. 5: zeigt einen Teilquerschnitt durch den Flüssigkeitssensor von Fig. 4;
- Fig. 6: zeigt eine weitere Ausführungsform eines Flüssigkeitssensors; und
- Fig. 7: zeigt einen Teilschnitt durch den Flüssigkeitssensor von Fig. 6.

In den Figuren zeigen gleiche Bezugszeichen gleiche oder funktionsgleiche Elemente.

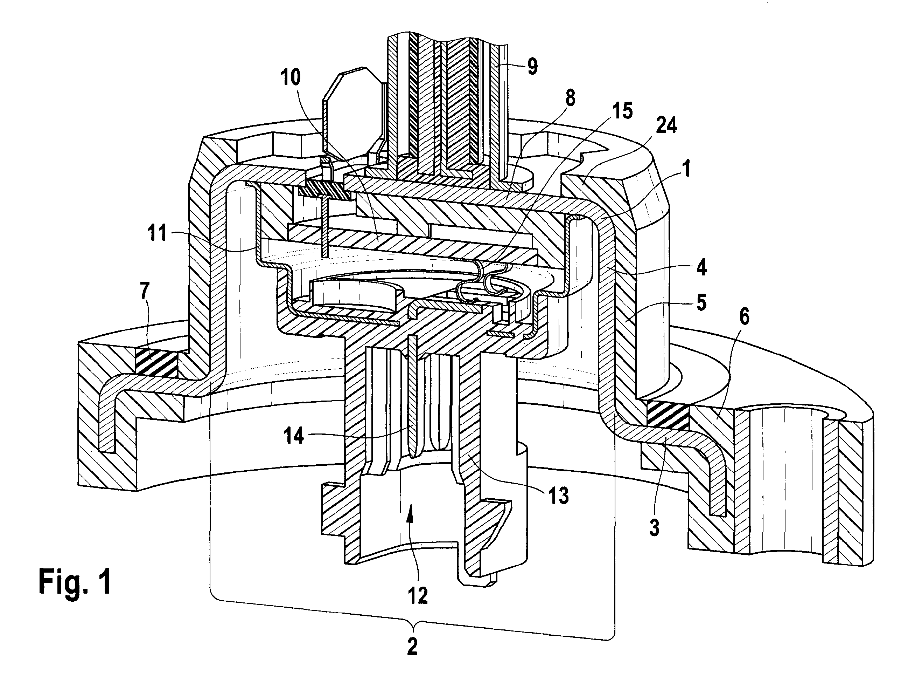

Eine erste Ausführungsform wird beispielhaft für einen Flüssigkeitssensor anhand den Figuren 1 - 3 erläutert.

Ein Gehäuse des Flüssigkeitssensors weist einen metallischen Gehäusekörper 1 auf. Der Gehäusekörper 1 kann die in Fig. 1 dargestellte Form aufweisen. Die Form des Gehäusekörpers weist eine Dose 2 auf, die einen Innenraum des Gehäuses definiert. Abgewinkelt zu einer Wandung der Dose 2 verläuft ein Flanschring 3. Der Gehäusekörper kann unter anderem durch ein Tiefziehverfahren hergestellt werden. Materialien für den Gehäusekörper 1 sind Eisen, Stahl, rostfreier Stahl, Aluminium oder anderen metallischen Werkstoffen.

Der Gehäusekörper 1 ist in dieser Ausführungsform zum Großteil an seiner Außenseite durch einen zweiteiligen Gehäusemantel 5, 6 bedeckt. Der Gehäusemantel besteht bevorzugt aus einem Kunststoffmaterial. Das Kunststoffmaterial sollte beständig gegenüber Flüssigkeiten sein, mit denen der Flüssigkeitssensor benetzt wird. Ferner muss der Kunststoff eine ausreichende Temperaturstabilität aufweisen, zum Beispiel im Bereich zwischen -40°C und 150°C.

Ein erster Teil 5 des Gehäusemantels bedeckt die Seitenwände 4 der Dose 2. Zudem kann ein Randbereich 7 des Bodens der Dose 2 durch den Gehäusemantel gegenüber der Umwelt isoliert werden.

Ein zweiter Teil 6 des Gehäusemantels ist an dem Flanschring 3 befestigt oder aufgebracht. Der zweite Teil 6 kann sowohl die Ober- als auch die Unterseite des Flanschrings 3 umschließen.

Auf dem Flanschring 3 ist ein Dichtungsmaterial 7 angeordnet. Das Dichtungsmaterial 7 ist mit dem Flanschring 3 in unmittelbarer Berührung. Das Dichtungsmaterial 7 trennt ferner den ersten Teil 5 von dem zweiten Teil 6 des Gehäusemantels in zwei separate nicht miteinander verbundene Bestandteile. Das Dichtungsmaterial 7 ist vollständig umlaufend auf dem Flanschring 3 aufgebaut. Der auf diese Weise gebildete Dichtungsring 7 ist vorzugsweise aus einem ölbeständigen und elastischen Material gebildet. Hierfür eignen sich unter anderem Silikone.

Auf den Boden 8 der Dose 2 ist ein Kapazitätssensor 9 angeschweißt. Der Kapazitätssensor 9 kann beispielsweise aus zwei ineinander angeordneten zylindrischförmigen Elektroden bestehen.

Innerhalb der Dose 2 ist eine Leiterplatte 10 mit darauf befindlichen Bauelementegruppen angeordnet.

Die Bauelementegruppen umfassen die notwendigen elektronischen Schaltungen zum Betrieb, Steuern, Versorgen, etc. des Flüssigkeitssensors. Eine elektrische Verbindung von der Leiterplatte zu dem kapazitiven Sensor 9 wird durch Durchführungen durch den Boden 8 erreicht. Die Durchführungen weisen vorzugsweise eine Glas- oder Keramikwandung für eine elektrische Isolierung auf.

Die Leiterplatte kann an dem Gehäusekörper 1 befestigt sein.

In der Dose 2 ist ferner ein Einsatz 11 angeordnet. Der Einsatz 11 bildet mit der Dose 2 einen abgeschlossenen Raum, in dem die Leiterplatte 10 enthalten ist. Der Einsatz 11 wird hierfür mit einer durchgehenden Schweißnaht mit dem Boden 8 oder der Seitenwand 4 der Dose 2 verbunden. Die Schweißnaht ist vorzugsweise luftdicht. Die elektronischen Komponenten und die Leiterplatte 10 können hierdurch gegenüber Spritzwasser, korrosiven Gasen etc. geschützt werden.

Eine Steckerbaugruppe 12 mit einem Steckergehäuse 13 und einer Steckerzunge 14 ist mit dem Einsatz 11 mechanisch verbunden. Eine Kunststofflage kann auf den Verbindungsbereich der Steckerbaugruppe 12 mit dem Einsatz 11 aufgespritzt sein. Vorzugsweise wird die Steckerbaugruppe 12 und der Einsatz 11 dicht umspritzt. Hierdurch wird gewährleistet, dass der Hohlraum gebildet durch die Dose 2 und den Einsatz 11 auch im Bereich der Steckerbaugruppe luftdicht, zumindest Spritzwasser-dicht, ist. Eine zusätzliche Abdichtung durch Kleber ist auch denkbar. Eine elektrisch leitfähige Verbindung zwischen den Steckerzungen 14 und der Leiterplatte 10 kann durch Federelemente 15 erreicht werden. Die Federelemente 15 können an der Leiterplatte 10 befestigt sein.

Eine Baugruppe bestehend aus dem Einsatz 11 und der Steckerbaugruppe 12 kann während der Montage in die Dose eingesetzt werden und dann an dem Boden 8 durch Schwei-βen befestigt werden.

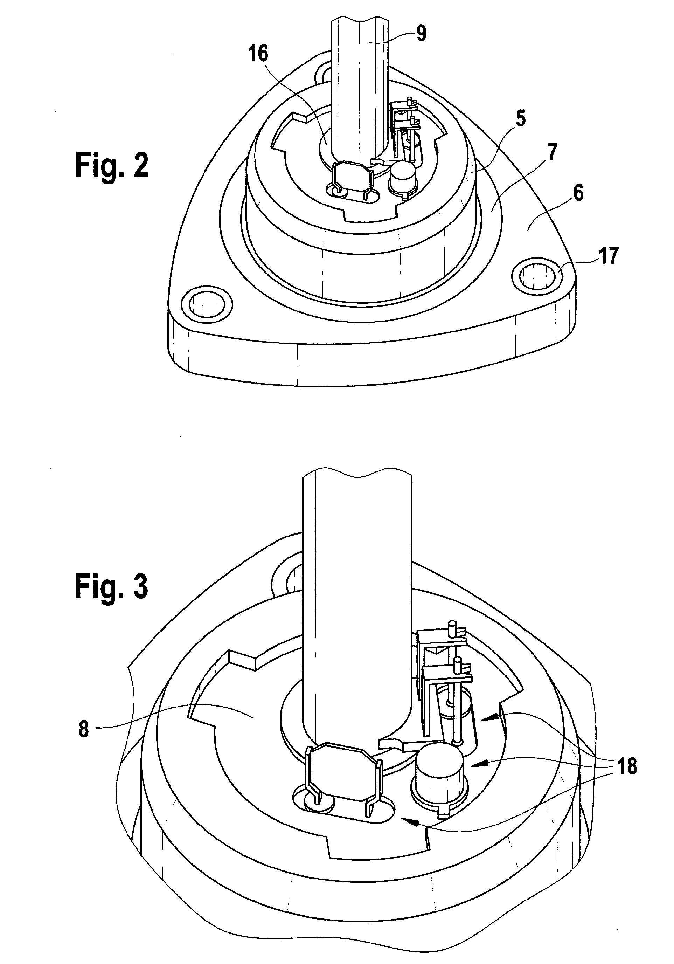

In der schrägen Draufsicht von Fig. 2 ist ein Befestigungsring 16 des kapazitiven Sensors 9 zu erkennen. Der Befestigungsring kann durch eine Schweißnaht gebildet werden.

In dem Flanschbereich können Buchsen 17 in das Kunststoffmaterial des Gehäusemantels 6 eingebracht sein.

Die Detailansicht von Fig. 3 zeigt weitere Sensoren, die auf der Außenseite des Bodens 8 angeordnet sind. Die Durchführungen der elektrischen Kontakte in dem Boden 8 weisen eine Glas- oder Keramikisolierung auf.

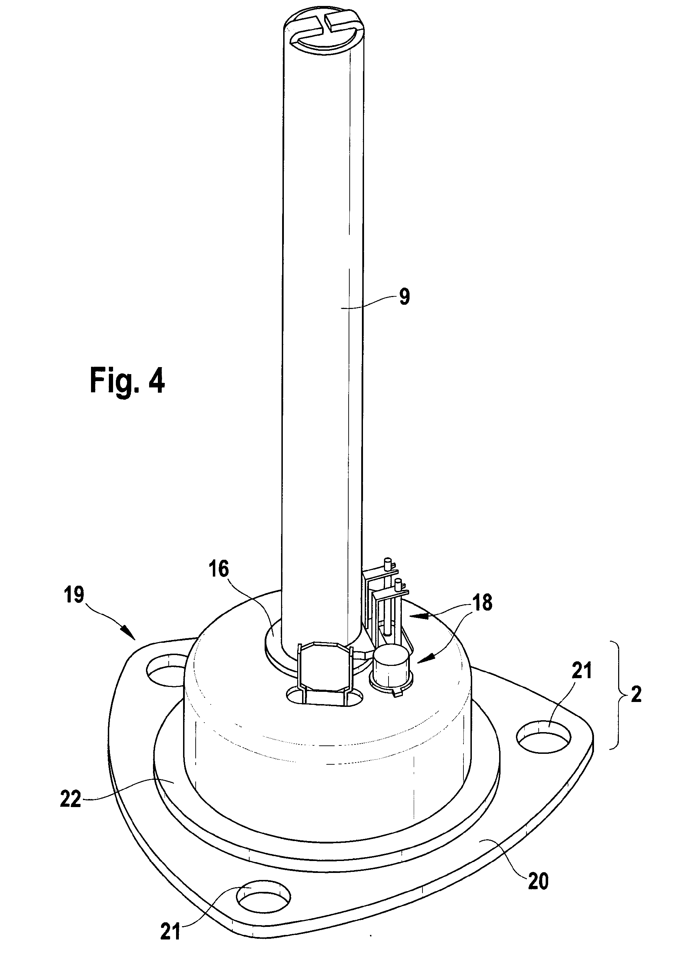

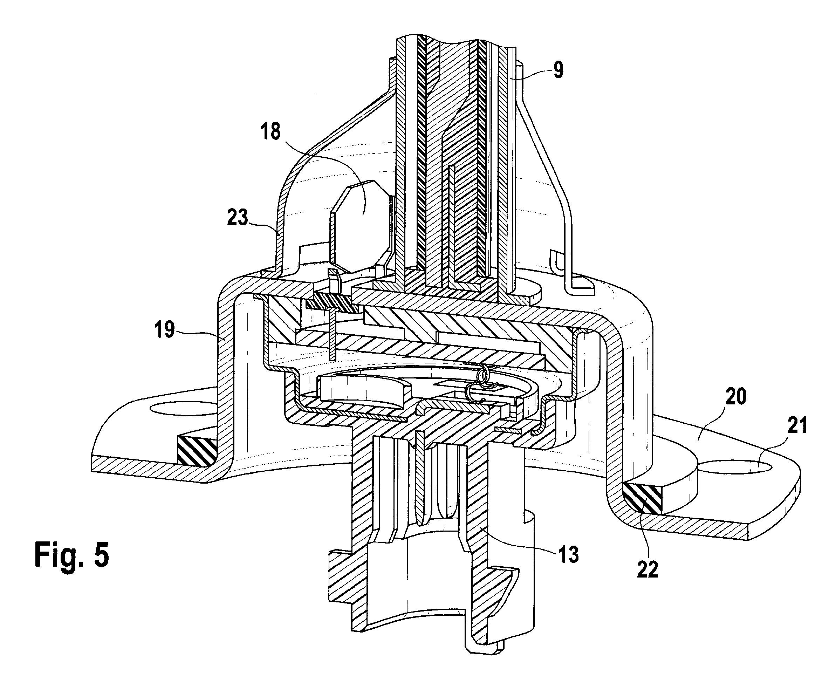

Eine weitere Ausführungsform ist in den Figuren 4 und 5 dargestellt. Ein metallener Gehäusekörper 19 weist eine Hutform auf. Die Dose 2 und auch die darin angeordneten Elemente können der ersten Ausführungsform von Fig. 1 entsprechen. In einem Flanschrand 20 der Hutform sind Buchsen 21 angeordnet. Diese können z. B. durch einen Stanzprozess in den tiefgezogenen Gehäusekörper eingebracht werden. Ein Dichtungsring 21 liegt auf dem Flanschring 20 auf.

Der Gehäusekörper 19 kann durch einen Gehäusemantel (nicht dargestellt) aus einem Kunststoffmaterial bedeckt sein. Der Kunststoffmantel kann als sehr dünne Schicht ausgeprägt sein. Im Bereich des Dichtungsrings 21 ist der Kunststoffmantel oder Gehäusemantel unterbrochen.

Eine Abdeckung 22 aus Blech oder Kunststoff kann zum Schutz der Bauelemente oder Sensoren 18 auf der Außenseite des Bodens 8 angeordnet sein. Die Abdeckung 23 kann angeschweißt oder verrastet werden.

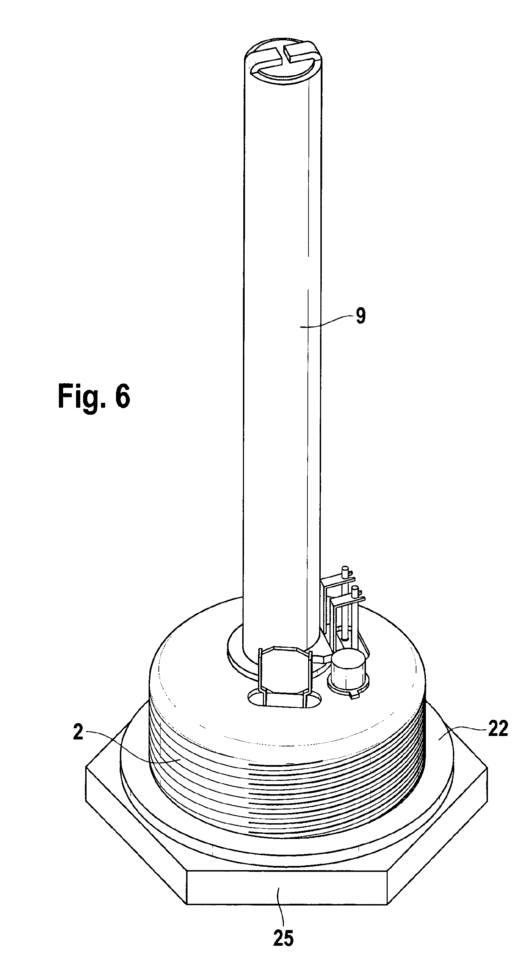

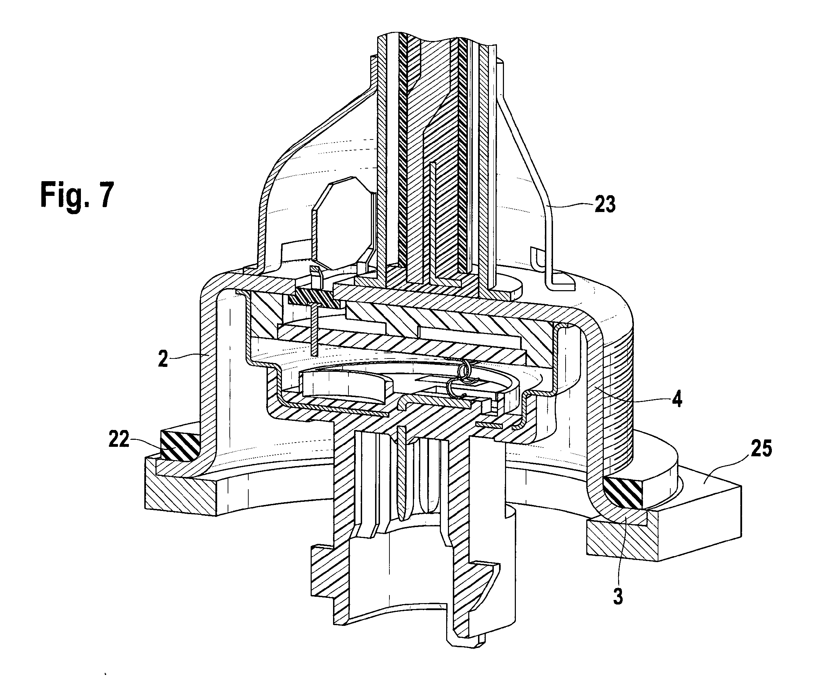

Figuren 6 und 7 zeigen eine dritte Ausführungsform eines Flüssigkeitssensors. Der Gehäusekörper weist wiederum eine Dose 2 mit einem Flanschring 3 auf. Auf dem Flanschring 3 ist ein umlaufender Dichtungsring 22 angeordnet. Die Seitenwand 4 der Dose 2 weist zumindest teilweise ein Außengewinde auf. Mittels des Außengewindes kann der Flüssigkeitssensor in einer Durchführung mit einem Gewinde befestigt werden. Um ein Werkzeug an den Flüssigkeitssensor ansetzen zu können, kann an dem Flanschrand 3 eine sechseckige oder quadratische Platte 25 angeordnet sein. Die Außenabmessungen der Platte 25 entsprechen vorzugsweise den Größen von Schraubschlüsseln.

## Patentansprüche

1. Flüssigkeitssensor mit
- einem metallischen Gehäusekörper (1), der eine Dose (2) und einen die Dose (2) umlaufenden Flanschring (3) aufweist,
- einem Gehäusemantel (5, 6) aus einem Kunststoffmaterial, der auf einer Außenseite des Gehäusekörpers (1) angeordnet ist, und
- einem Dichtungsring (7), der auf dem Flanschring (3) umlaufend angeordnet ist **dadurch gekennzeichnet dass**
der Dichtungsring (7) den Gehäusemantel (5,6) in zwei von einander isolierte Abschnitte unterteilt.

2. Flüssigkeitssensor nach Anspruch 1, wobei der Dichtungsring (7) den metallischen Gehäusekörper (1) im Bereich des Flanschrings (3) berührt.

3. Flüssigkeitssensor nach Anspruch 1 oder 2, wobei ein zylindrisch-förmiger Kapazitätssensor an einer Außenseite der Dose (2) angeschweißt ist.

4. Flüssigkeitssensor nach einem der vorhergehenden Ansprüche, wobei ein Einsatz (11) in der Dose (2) eingesetzt ist und auf dem Einsatz (11) elektronische Baugruppen zur Ansteuerung und/oder Versorgung des Flüssigkeitssensors angeordnet sind.

5. Flüssigkeitssensor nach Anspruch 4, wobei der Einsatz (11) mit der Dose (2) dicht verschweißt ist.

6. Flüssigkeitssensor nach Anspruch 4 oder 5, wobei eine Steckerverbindung (12) an dem Einsatz (11) befestigt ist und leitfähige Federelemente (15) an den elektronischen Baugruppen zum elektrischen Kontaktieren der Steckerverbindung (12) vorgesehen sind.

7. Flüssigkeitssensor nach einem der vorhergehenden Ansprüche, wobei die Dose (2) an der Außenseite ein Außengewinde zum Befestigen des Flüssigkeitssensors aufweist

8. Flüssigkeitssensor nach Anspruch 1, wobei in einem ersten (6) der beiden von einander isolierten Abschnitte des Gehäusemantels (1) Buchsen (17) zum Befestigen des Flüssigkeitssensors angeordnet sind.

9. Flüssigkeitssensor nach Anspruch 1 oder 2, wobei ein zweiter (5) der beiden von einander isolierten Abschnitte des Gehäusemantels (1) zumindest die Seitenwände (4) der Dose (2) bedeckt.

10. Flüssigkeitssensor nach einem der vorhergehenden Ansprüche, wobei der Flüssigkeitssensor ein Füllstandssensor für Kraftstoff und/oder ein Sensor für eine Motorölzusammensetzung ist.

## Claims

1. Liquid sensor, having
- a metallic housing body (1) which has a box (2) and a flange ring (3) running around the box (2),
- a housing casing (5, 6) made of a plastic material which is arranged on an outer side of the housing body (1), and
- a sealing ring (7) which is arranged running around the flange ring (3),
**characterized in that**
the sealing ring (7) divides the housing casing (5, 6) into two sections which are insulated from one another.

2. Liquid sensor according to Claim 1, wherein the sealing ring (7) is in contact with the metallic housing body (1) in the region of the flange ring (3).

3. Liquid sensor according to Claim 1 or 2, wherein a cylindrically shaped capacitance sensor is welded onto an outer side of the box (2).

4. Liquid sensor according to one of the preceding claims, wherein an insert element (11) is inserted into the box (2), and electronic assemblies for actuating and/or supplying the liquid sensor are arranged on the insert element (11).

5. Liquid sensor according to Claim 4, wherein the insert element (11) is welded to the box (2) in a sealed fashion.

6. Liquid sensor according to Claim 4 or 5, wherein a plug connection (12) is attached to the insert element (11), and conductive spring elements (15) are provided on the electronic assemblies for making electrical contact with the plug connection (12).

7. Liquid sensor according to one of the preceding claims, wherein the box (2) has on its outside an external thread for attaching the liquid sensor.

8. Liquid sensor according to Claim 1, wherein sockets (17) for attaching the liquid sensor are arranged in a first section (6) of the two sections of the housing casing (1) which are insulated from one another.

9. Liquid sensor according to Claim 1 or 2, wherein a second section (5) of the two sections of the housing casing (1) which are insulated from one another covers at least the side walls (4) of the box (2).

10. Liquid sensor according to one of the preceding claims, wherein the liquid sensor is a filling level sensor for fuel and/or a sensor for a composition of engine oil.

## Revendications

1. Détecteur de liquide, comprenant
- un corps de boîtier (1) métallique qui comprend une boîte (2) et une bride annulaire (3) entourant la boîte (2),
- une enveloppe de boîtier (5, 6) en une matière plastique, laquelle enveloppe de boîtier est disposée sur un côté extérieur du corps de boîtier (1),
- une bague d'étanchéité (7) qui est disposée de manière périphérique sur la bride annulaire (3),
**caractérisé en ce que**
la bague d'étanchéité (7) divise l'enveloppe de boîtier (5, 6) en deux sections isolées l'une de l'autre.

2. Détecteur de liquide selon la revendication 1, dans lequel la bague d'étanchéité (7) est en contact avec le corps de boîtier (1) métallique dans la région de la bride annulaire (3).

3. Détecteur de liquide selon la revendication 1 ou 2, dans lequel un détecteur capacitif de forme cylindrique est soudé sur un côté extérieur de la boîte (2).

4. Détecteur de liquide selon l'une quelconque des revendications précédentes, dans lequel un insert (11) est inséré dans la boîte (2) et des modules électroniques pour la commande et/ou l'alimentation du détecteur de liquide sont disposés sur l'insert (11).

5. Détecteur de liquide selon la revendication 4, dans lequel l'insert (11) est soudé de manière étanche sur la boîte (2).

6. Détecteur de liquide selon la revendication 4 ou 5, dans lequel un connecteur enfichable (12) est fixé à l'insert (11) et des éléments ressorts conducteurs (15) sont prévus sur les modules électroniques en vue de la mise en contact électrique du connecteur enfichable (12).

7. Détecteur de liquide selon l'une quelconque des revendications précédentes, dans lequel la boîte (2) comprend sur le côté extérieur un filetage extérieur en vue de la fixation du détecteur de liquide.

8. Détecteur de liquide selon la revendication 1, dans lequel des douilles (17) sont disposées dans une première section (6) des deux sections de l'enveloppe de boîtier (1) isolées l'une de l'autre en vue de la fixation du détecteur de liquide.

9. Détecteur de liquide selon la revendication 1 ou 2, dans lequel une deuxième section (5) des deux sections de l'enveloppe de boîtier (1) isolées l'une de l'autre recouvre au moins les parois latérales (4) de la boîte (2).

10. Détecteur de liquide selon l'une quelconque des revendications précédentes, dans lequel le détecteur de liquide est un détecteur de niveau de carburant et/ou un détecteur pour une composition d'huile-moteur.
